# EUROPÄISCHE PATENTSCHRIFT

(11) **EP 2 465 752 B1**
(45) Veröffentlichungstag und Bekanntmachung des Hinweises auf die Patenterteilung: **10.09.2014**
(21) Anmeldenummer: 11009822.5
(22) Anmeldetag: 13.12.2011
(51) Int. Cl.: B62D 5/04, F16C 23/08

(54) **Servolenkung mit sphärischer Lagerung**
Power steering with spherical bearing
Direction assistée dotée d'un palier sphérique

(30) Priorität: 16.12.2010 DE 102010054830
(43) Veröffentlichungstag der Anmeldung: 20.06.2012
(73) Patentinhaber: ThyssenKrupp Presta AG, 9492 Eschen (LI)
(72) Erfinder: Zoltan, Stamm, 9472 Grabs (DE)
(74) Vertreter: Lenzing, Andreas

(56) Entgegenhaltungen:
- WO-A1-03/076832
- DE-A1-102006 037 479
- DE-A1-102008 010 128
- FR-A1- 2 816 015

## Beschreibung

Die vorliegende Erfindung betrifft eine Servolenkung, insbesondere für ein Kraftfahrzeug, mit einem Servomotor, der ein axial verlagerbares Bauelement über eine in einem Gestell drehbar, aber axial unverschiebbar gelagerte Mutter antreibt, nach dem Oberbegriff des Anspruchs 1. Bei Lenkungen mit einem elektromotorischen Servoantrieb, der über einen Kugelgewindetrieb wirkt, wird die Kugelmutter entweder starr im Gehäuse gelagert oder durch Einsatz von Federelementen und besondere Gestaltung des Gehäuses oder des Lagers eine gewisse Längs- und Kippbewegung ermöglicht.

Die DE 103 10 492 A1 beschreibt eine Servolenkung, insbesondere für Kraftfahrzeuge, mit einem als Elektromotor gebildeten Servomotor, der ein als Schubstange ausgebildetes, axial verlagerbares Bauelement übereine in einem als Lenkungsgehäuse gebildeten Gestell drehbar, aber axial unverschiebbar gelagerte Mutter antreibt. Der Servomotor, die Schubstange und die Mutter sind mittels eines exzentrischen Lagerringes derart gelagert, dass der Achsabstand zwischen der Motorwelle des Servomotors und der Schubstange variierbar ist, was eine einfache, rasche Montage der Servolenkung ermöglicht.

Aus der DE 102 02 483 A1 ist eine elektrische Lenkvorrichtung bekannt, die eine Zahnstange aufweist, die mit einer Lenkspindel verbunden ist, einen Motor zum Unterstützen einer Lenkkraft mit einem koaxial auf der Zahnstange angeordneten Rotor, einen Spindeltrieb, bei dem Kugeln zwischen einer mit dem Rotor verkeilten Mutter und einer auf der Zahnstange gebildeten Schraube eingelegt sind, und die ein Gehäuse aufweist, das insgesamt näherungsweise zylindrisch gestaltet ist. Die Mutter des Kugelumlaufspindelmechanismus ist drehbar in einem Lager im Inneren des Muttergehäuseabschnittes gelagert.

In der DE 1947337 U ist ein elastisches Wälzlager dargestellt, welches eine axiale Beweglichkeit und eine axiale Federung mit Rückstellkraft aufweist. Ein Wälzlager mit einem Lageraußenring und einem Lagerinnenring, wobei der Lageraußenring und /oder der Lagerinnenring jeweils zwischen mindestens einem Dämpfungselement angeordnet ist, ist aus der DE 10 2004 034 701 A1 bekannt.

Die EP 1 571 067 A1 offenbart die elastische Lagerung einer Schneckenwelle die koaxial die Motorweile eines Servomotors umgreift.

Die EP 2 049 383 81 zeigt eine Lösung, um die Schwenkbarkeit des Radiallagers zu ermöglichen bzw. zu verbessern. Es ist vorgesehen, eine konvexe Wölbung an dem Außenumfang des Außenrings vorzusehen oder die Mutter, auf der der Innenring sitzt, mit einer konvexen Wölbung zu versehen. aufweist. Durch die konvexe Wölbung des Außenumfangs des Außenrings oder der Mutter soll eine Freistellung des Radiallagers und eine Verschwenkbarkeit der Mutter und des axial verlagerbaren Bauelements erreicht werden. An jeder Stirnseite des Radiallagers ist ein Stahlring mit einem aufvulkanisierten Element mit elastomeren Eigenschaften vorgesehen, welches bei wechselnden Lasten eine axiale und radiale Dämpfung sowie die Durchführung und Dämpfung der Schwenkbewegung des axial verlagerbaren Bauelements ermöglichen soll. Bei Biegemomentbeanspruchung des axial verlagerbaren Bauelements soll ein Verspannen des Systems vermieden werden.

Eine sphärische Lagerung, bei der sowohl der Lagerring als auch das Gestell eine kugelige Fläche aufweisen, ist aus der DE 60210154 T2 bekannt. Bei dieser Lösung ist der Mittelpunkt der Kugelfläche im Schnittpunkt der Mittelebene des Lagers mit der Drehachse konstruktiv festgelegt. Ähnliche Funktionen werden von Tonnenlagern und Pendelrollenlagern ermöglicht, die einen Winkelfehler der Welle zulassen. Das Ziel dieser Lagerungen ist der Toleranzausgleich, wodurch Verspannungen des Kugelgewindetriebs vermieden werden. Weiter wird die dynamische und statische Belastung der Bauteile reduziert. Es ergeben sich verbesserte akustische Eigenschaften und die Reduktion des mechanischen Spiels, das durch Wärmeausdehnung der Komponenten entsteht.

Eine konvexe Oberfläche eines Lageraußenrings ist ebenso aus der WO 03/076832 bekannt, die mit einer konkav ausgeformten Kalotte korrespondiert, wodurch eine Gewindespindel, die durch eine Kugelmutter in dem Lager gelagert ist, verkippt werden kann.

Bei der beschriebenen Lagerung zwischen Kugelflächen tritt ebenso wie bei der Verwendung von Tonnenlagern und Pendellagern das Problem auf, dass diese Lagerungen eher für Radialkräfte ausgelegt sind. Die in einem elektrisch unterstützten Lenkgetriebe an der Kugelmutter auftretenden Lasten sind jedoch bezüglich der Zahnstange oder Gewindespindel hauptsächlich axial gerichtet.

Der Erfindung liegt die Aufgabe zugrunde, eine Servolenkung zu schaffen, bei der die Kugelmutter in einer sphärischen Lagerung sphärisch eine dauerhaft höhere axiale Belastbarkeit aufweist.

Diese Aufgabe wird mit einer Servolenkung mit den Merkmalen des Anspruchs 1 gelöst.

Weil die Lagerung Kugelflächen mit einem Kugelmittelpunkt außerhalb einer Ebene des Lagers aufweist, wird die axiale Projektionsfläche des Kontaktbereichs erhöht, der Kontaktwinkel verändert sich und die Konstruktion wird dadurch geeignet zur Aufnahme von höheren Axialkräften.

Die Konstruktion kann mit einseitiger oder beidseitiger Kugelfläche ausgebildet werden. Auf dem Lagerring werden so eine oder zwei Kugelflächen ausgebildet, die jeweils in einer Richtung Axialkräfte aufnehmen können.

Bevorzugt ist die Lösung mit beidseitiger Kugelfläche. Wenn hierbei die beiden Kugelflächen keinen gemeinsamen Mittelpunkt haben, wird auf der nicht belasteten Seite das Lager von der Gleitfläche getrennt und die Federelemente komprimiert. Der Kugelmittelpunkt der Kontaktfläche wird soweit aus der Lagermitte hinausgeschoben, dass die Kontaktspannungen bei der maximalen axialen Belastung noch nicht den Grenzwert überschreiten.

Ein Federelement kann entweder einseitig, oder zweiseitig eingesetzt werden. Bevorzugt ist die zweiseitige Konstruktion, mit dem Vorteil, dass keine Steifigkeitsdifferenz bei Belastungen in unterschiedlichen Richtungen entsteht.

Der Kippwinkel des Lagers in dem Gehäuse kann durch ein zusätzliches Element begrenzt werden.

Die radiale Steifigkeit des Systems hängt vom Kontaktwinkel der Kugelfläche und der Steifigkeit der axial angeordneten Federelemente ab. Die sphärische Lagerung kann sowohl radial als auch axial vorgespannt sein, so dass sich ein spielfreier Sitz zwischen den Gleitelementen und dem Lagerring ergibt.

Das Gleitelement kann mehrteilig ausgeführt sein. Vorteil einer mehrteiligen Ausführung ist, dass eine Schale mit guten Gleiteigenschaften und ein Kern mit hoher Steifigkeit kombiniert werden können. Weiter ist es von Vorteil, dass das Gleitelement durch die Vorspannung und die Keilform leicht aufgeweitet werden kann und dadurch das Spiel zwischen Gleitelement und Gehäuse eliminiert wird.

Bei einer Ausführungsform mit einseitiger Kugelfläche ist die andere Lagerseite kegelförmig derart gestaltet, dass die Spitze dieses Kegels der Mittelpunkt der Kugelfläche ist. An der Seite, an der die kegelförmige Fläche ausgebildet ist, ist der Lagerring vorzugsweise durch ein Element mit Federwirkung abgestützt.

Die eingesetzten Federelemente können vorgespannt sein. Dadurch wird Spielfreiheit gewährleistet. Des Weiteren ist dieses Merkmal vorteilhaft, damit auf der entlasteten Seite kein Spiel entstehen kann.

Die Federelemente können tellerfederartig oder als Elastomerfeder ausgebildet sein.

Das Gleitelement ist bevorzugt ein Kunststoff mit guten Gleiteigenschaften oder ein Metall-Polymer-Gleitwerkstoff.

Nachfolgend werden Ausführungsbeispiele der Erfindung anhand der Zeichnung beschrieben. Es zeigen:
- Fig. 1:: ein Lager mit einseitiger kugelschalenförmiger Abstützung;
- Fig. 2:: ein Lager mit zweiseitiger kugelschalenförmiger Abstützung; sowie
- Fig. 3:: das Lager aus Fig. 2 unter axialer und radialer Belastung.

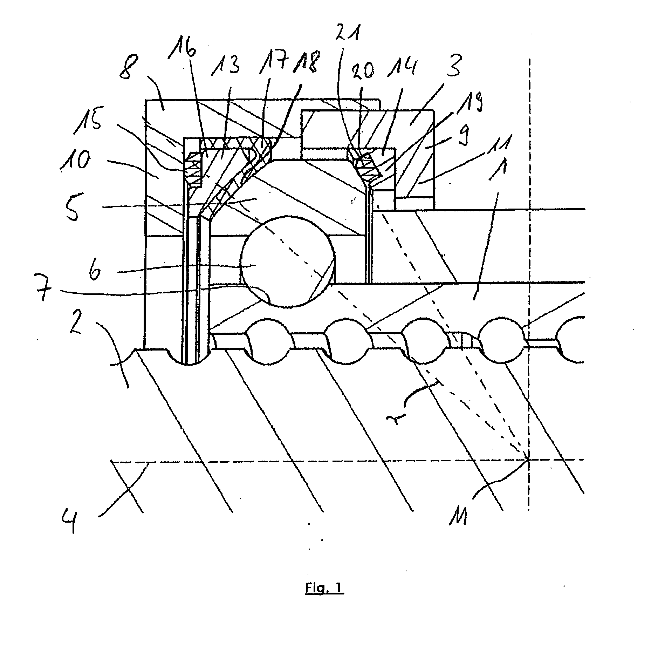

In der Figur 1 ist schematisch in einem Längsschnitt ein Teil einer Kraftfahrzeugservolenkung dargestellt. Es handelt sich um einen Bereich, in dem eine Kugelmutter 1 zum Antrieb einer Gewindespindel 2 in einem Lenkungsgehäuse 3 gelagert ist. Die Kugelmutter 1 wird in ihrem nicht dargestellten Bereich über einen Elektromotor entweder direkt oder über ein Getriebe angetrieben und bewirkt bei Drehung um eine Längsachse 4, dass die Gewindespindel 2 in Achsrichtung verschoben wird. Längsseitig an der Gewindespindel 2 angebrachte Spurstangen sind in bekannter Weise mit Achsschenkeln lenkbarer Räder gekoppelt, so dass eine Drehung der Kugelmutter 1 einen Lenkvorgang des Kraftfahrzeugs bewirkt.

Die Kugelmutter 1 ist in dem Gehäuse 3 in einem Wälzlager gelagert. Das Wälzlager umfasst einen Lageraußenring 5 und eine Anzahl von Kugeln 6, die die Wälzkörper bilden. Der Lagerinnenring ist hier einstückig mit der Kugelmutter 1 ausgebildet, in dem die Kugelmutter 1 an ihrem äußeren Umfang mit einer rillenförmigen Lauffläche 7 versehen ist.

Der Lageraußenring 5 ist gegenüber dem Lenkungsgehäuse 3 elastisch abgestützt. Das Lenkungsgehäuse 3 weist einen ersten Gehäuseteil 8 und einen zweiten Gehäuseteil 9 auf, die dem Lageraußenring 5 außen nach Art eines Lagersitzes umgeben. Der Gehäuseteil 8 weist einen Ringbund 10 auf, der nach innen auf die Gewindespindel 2 weist. Die radiale Erstreckung ist etwa so groß, dass die innere Lauffläche des Lageraußenrings 5 etwa in der gleichen radialen Position, jedoch in einem axialen Abstand von dem Ringbund 10 angeordnet ist. Der zweite Gehäuseteil 9 weist ebenfalls einen nach innen weisenden Ringbund 11 auf, der in Radialrichtung kürzer ist und außerhalb der Kugelmutter 1 endet.

Zwischen den umfangseitigen Bereichen der Gehäuseteile 8 und 9 und den Ringbunden 10 und 11 sind rechtwinklige Bereiche ausgebildet, in denen ein erstes Lagerelement 13 und ein zweites Lagerelement 14 angeordnet sind. Das erste Lagerelement 13 ist mit einem Federelement 15 in Form eines Ringes aus elastomeren Material an dem Ringbund 10 angelegt. Ein Kern 16 liegt in Achsrichtung neben dem Element 15 und einem Abstand von dem Ringbund 10. Der Kern 16 ist mit einem Gleitelement 17 umgeben und zwar liegt das Gleitelement 17 an der äußeren Umfangsfläche des Kerns 16 zwischen dem Kern 16 und dem Gehäuseteil 10 sowie an der Innenseite des Kerns 16 zwischen dem Kern 16 und dem Lageraußenring 5. In diesem Bereich ist das Gleitelement 17 kugelschalenförmig gekrümmt und mit seiner Oberfläche in einem Winkel von etwa 45 Grad zur Achse 4 orientiert. Die dem Lageraußenring 5 zugewandte Fläche des Gleitelements 17 ist konkav ausgebildet. Der Lageraußenring 5 ist an dieser Stelle mit einer äußeren Oberfläche 18 versehen, die mit gleicher Krümmung konvex ausgebildet ist. Die Krümmung der kugelschalenförmigen Oberfläche 18 und der korrespondierenden Oberfläche des Gleitelements 17 ist so definiert, dass sie einen Radius r aufweist. Die Oberfläche 18 bildet einen Teil einer Kugeloberfläche, die den Radius r aufweist und deren Mittelpunkt außerhalb der Ebene des Lagers auf der Achse 4 der Gewindespindel 2 liegt. Im Mittelpunkt ist in der Figur 1 mit M bezeichnet.

Das Lagerelement 14, dass dem Lagerelement 13 in Achsrichtung gegenüber an der anderen Seite des Lageraußenrings 5 angeordnet ist, weist ein Trägerelement 19 aus einem harten Trägermaterial auf. Das Trägerelement 19 weist eine umlaufende Nut 20 auf, die einen etwa rechteckigen Querschnitt aufweist und deren offene Seite dem Lageraußenring 5 zugewandt ist. In die Nut ist ein Dämpfungselement 21 aus einen elastomeren Werkstoff eingesetzt. Der Lageraußenring 5 stützt sich im Bereich des Lagerelements 14 in der dargestellten Ruhestellung ausschließlich an dem Dämpfungselement 21 ab. Die Dämpfungselemente 15 und 21 sind so dimensioniert, dass sie den Lageraußenring 5 zwischen dem Gleitelement 17 und dem Dämpfungselement 21 unter Vorspannung halten.

Bei einem über die Spurstangen einwirkenden Stoß, insbesondere auch bei einer auf die Gewindespindel 2 wirkenden Biegebelastung, kann die Gewindespindel mit samt der Kugelmutter 1 eine Kraft auf den Lageraußenring 5 ausüben. Je nach Belastung wird der Lageraußenring 5 entweder genau in Achsrichtung der Achse 4 bewegt, was der normalen Kraftrichtung entspricht, die auch durch den Servoantrieb entsteht, oder es wird ein Kippmoment auf die Lagerung ausgeübt, die bei der Vorrichtung nach Figur 1 zu einem Kippen des Lageraußenrings 5 um den Mittelpunkt M führt. Der Mittelpunkt 5 ist das konstruktive Zentrum der Fläche 18 und der entsprechenden inneren Oberfläche des Gleitelements 17. Die Wahl des Materials für das Gleitelement 17 erlaubt eine reibungsarme Verkippung des Lageraußenrings 5 um den Mittelpunkt M. Wird in dem Ausschnitt aus Figur 1 der Lageraußenring 5 gegen das Gleitelement 18 gedrängt, so gibt das Dämpfungselement 15 geringfügig nach und ermöglicht dem Lageraußenring 5 die beschriebene Bewegung. Die gegenüberliegende, nicht dargestellte Seite der Lagerung erfährt dann eine Kraft auf das Dämpfungselement 21, welches ringförmig umlaufend ausgebildet ist. Dort wird das Dämpfungselement 21 dann komprimiert, während es in dem dargestellten Bereich der Lagerung entlastet wird. Bei einer Kippbewegung des Lageraußenrings 5 in der entgegengesetzten Richtung wird dann der dargestellte Bereich des Dämpfungselements 21 komprimiert, während diametral gegenüber das Dämpfungselement 15 ebenfalls komprimiert wird.

Die gesamte Anordnung ist im wesentlichen rotationssymmetrisch ausgebildet. Insbesondere sind die Lagerelemente 13 und 14, die Dämpfungselemente 15 und 21 sowie die Träger 16 und das Gleitelement 17 ringförmig rotationssymmetrisch ausgebildet.

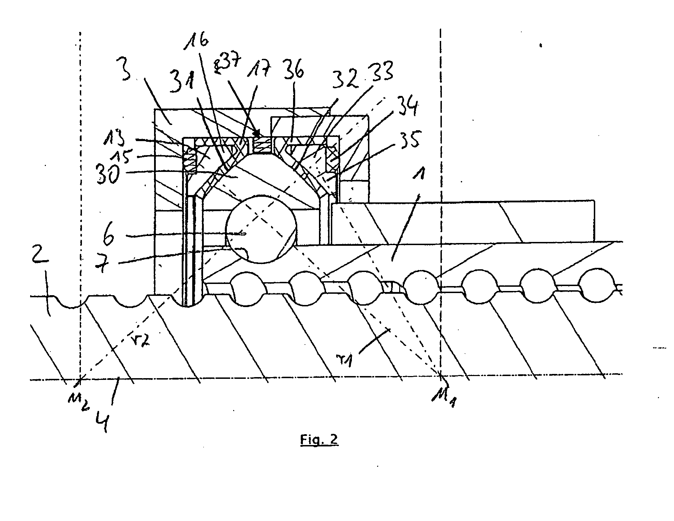

In der Figur 2 ist eine andere Ausführungsform mit zwei kugelschalenförmigen Gleitflächen dargestellt. Gleiche Bauelemente tragen gleiche Bezugsziffern.

Im einzelnen ist ein Lageraußenring 30 mit einer ersten umfangsseitigen kugelförmigen Oberfläche 31 und einer zweiten umfangsseitigen Kugeloberfläche 32 versehen. Die Oberflächen 31 und 32 liegen etwa dachartig an der Außenseite des Lageraußenrings 30, also der Lauffläche des Wälzkörpers 6 abgewandt. Die Oberfläche 31 ist als Teil einer Kugelschale mit einem Radius r1 gekrümmt, wobei der geometrische Mittelpunkt der Kugeloberfläche mit M1 bezeichnet ist und auf der Achse 4 der Gewindespindel 2 liegt. Die gegenüberliegende Oberfläche 32 ist ebenfalls kugelförmig mit einem Radius r2 gekrümmt. Der geometrische Mittelpunkt der zugehörigen Kugeloberfläche ist mit M2 bezeichnet und liegt ebenfalls auf der Achse 4, bezüglich der radialen Mittelebene der Lagerung etwa spiegelbildlich gegenüber dem Mittelpunkt M1.

An der Kugeloberfläche 31 liegt das gleiche Lagerelement 13 mit dem Gleitelement 17 an, das schon zur Figur 1 ausführlich beschrieben wurde. An der Kugeloberfläche 32 liegt ein im wesentlichen baugleiches, spiegelbildlich angeordnetes Lagerelement 33 an, das stirnseitig zu dem Ringbund ein Dämpfungselement 34 trägt, welches einen Kern 35 gegenüber dem Gehäuse 3 abstützt. Der Kern 35 ist zu dem Lageraußenring 30 hin von einem Gleitelement 36 umgeben, welches die gleichen Eigenschaften aufweist wie das Gleitelement 17.

An der Innenseite des Gehäuses 3 ist zwischen den Lagerelemente 13 und 33 ein umlaufender Ring 37 angeordnet, der bei unbelasteter Lagerung in einem über den Umfang gleichmäßigen Abstand von dem Lageraußenring 30 sitzt. Der Ring 37 dient als Anschlagring zur Begrenzung des radialen Wegs, der dem Lageraußenring 30 unter Last zur Verfügung steht.

Bei einer rein axialen Belastung der Gewindespindel 2 wird je nach Belastungsrichtung entweder das Dämpfungselement 15 oder das Dämpfungselement 34 komprimiert, so dass der Lageraußenring 30 in Richtung dieser konstruktiv vorgesehenen Belastung abgestützt und gefedert ist. Eine Biegebelastung ist dem gegenüber aus axialen und radialen Lastkomponenten zusammengesetzt.

Bei einer Biegebelastung, die über die Gewindespindel 2 auf die Kugelmutter 1 wirkt, wird die Lagerung der Kugelmutter 1 verschwenkt. Die Gestaltung der äußeren Oberflächen 31 und 32 des Lageraußenrings 30 ermöglichen hierbei eine Verschwenkung je nach Richtung der Krafteinleitung um den Mittelpunkt M1 oder um den Mittelpunkt M2. Die Oberflächen 31 beziehungsweise 32 gleiten dann in Umfangsrichtung des jeweiligen Kreises mit dem Radius r1 oder r2 auf dem Gleitelement 17 beziehungsweise 36. Die axiale Verlagerung der Lagerelemente 13 beziehungsweise 33 wird durch die Dämpfungselemente 15 beziehungsweise 34 an den betreffenden Bereichen des Umfangs aufgefangen. Der Ring 37 begrenzt die mögliche Kippbewegung und den radialen Versatz des Lageraußenrings 30 auf ein konstruktiv zulässiges Maß.

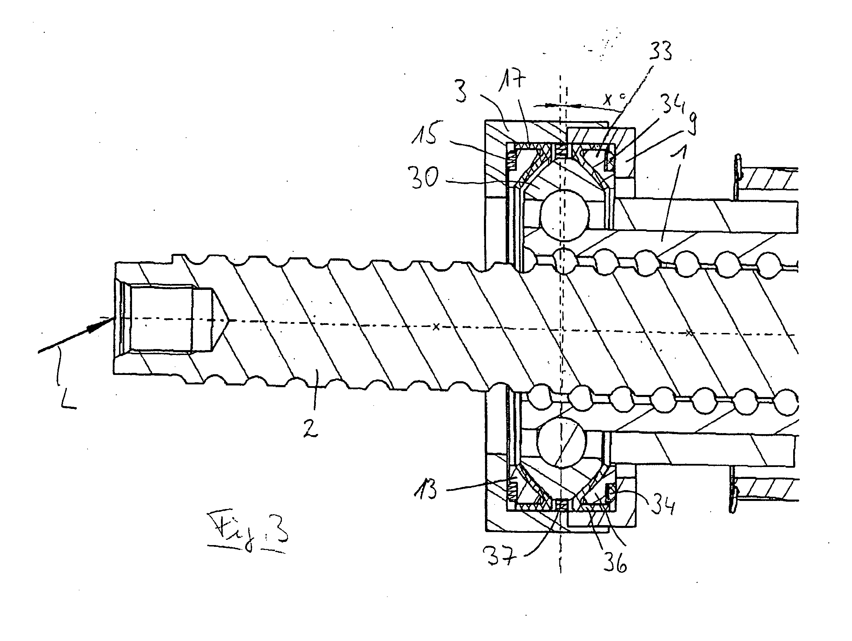

Ein solcher Lastfall ist in der Figur 3 dargestellt. Die Figur 3 zeigt die Lagerung aus Figur 2 bei Einleitung einer Last in Richtung eines Pfeils L in Figur 3. Solche Lasten werden beispielsweise beim Anfahren an Bordsteinkanten über die Spurstangen in die Lenkung eingeleitet. Die Gewindespindel 2 gibt diese Last unmittelbar an die Kugelmutter 1 weiter, die dann die Last an den Lageraußenring 30 überträgt. Da das Getriebe von der Gewindespindel 2 bis hin zu dem Lageraußenring 30 spielfrei sein soll, ist diese Lastübertragung sehr direkt. Eine fest in dem Gehäuse 3 gelagerte Lageraußenschale würde hier hohe Kräfte im Bereich der Kugelmutter hervorrufen. Die in dem Ausführungsbeispiel der Figuren 2 und 3 dargestellte Lagerung ist in der Lage, diese Kräfte zu dämpfen.

Im Einzelnen führt die axiale Komponente der Kraft L dazu, dass das Dämpfungselement 34 komprimiert wird und der Kern 35 an dem Gehäuseteil 9 anschlägt. An der gegenüber liegenden Seite ist das Dämpfungselement 15 entlastet und es ergibt sich dort ein Luftspalt zwischen dem Lageraußenring 30 und dem Gleitelement 17. An der anderen Seite liegt der Lageraußenring 30 mit erhöhter Anlagekraft an dem Gleitelement 36 an. Dabei gleitet der Lageraußenring 30 auf Grund seiner kugelförmigen Anlagefläche an dem Gleitelement 36 nach unten, und zwar so weit, bis der Lageraußenring 30 an seiner äußeren Umfangsfläche an dem Ring 37 einseitig anliegt, und zwar in der Figur 3 unten. Der Abstand zwischen dem Lageraußenring 30 und dem Ring 37 hat sich an der gegenüber liegenden Seite, in Figur oben, vergrößert.

Insgesamt erlaubt die Lagerung des Lageraußenrings 30 zwischen den Lagerelementen 13 und 33 also eine Verschwenkung um einen Winkel x^{o}, was das Entstehen von Lastspitzen in dem oben skizzierten Lastfall zuverlässig verändert.

Weil die Krafteinleitung ins Lenkgetriebe durch die Spurstangen entsteht und diese im allgemeinen höhere Axialkräfte als Radialkräfte einleiten, wird der Lagerring in eine der Kugelschalen eingedrückt. Das Lager wird so auf der belasteten Seite sauber in der Kugelfläche liegen. Auf der weniger belasteten Seite kommt es so zu einem Abheben der Lager- und der Schalenfläche.

Bei der Werkstoffauswahl soll der breite Temperaturbereich, die hohe Belastung und deren Kombination berücksichtigt werden. Geeignete Werkstoffe sind zum Beispiel Kunststoff auf PEEK-Basis oder PPS-Basis mit Gleitzusätzen sowie Lagerelemente aus einer Metall-Bronze-PTFE-Struktur.

Durch die axialen Federelemente werden sowohl axiale, als auch radiale Wärmausdehnungsunterschiede aufgenommen.

### Bezugszeichen

- 1.: Kugelmutter
- 2.: Gewindespindel
- 3.: Lenkungsgehäuse
- 4.: Längsachse
- 5.: Lageraußenring
- 6.: Kugeln
- 7.: Laufrille
- 8.: Gehäuseteil
- 9.: Gehäuseteil
- 10.: Ringbund
- 11.: Ringbund
- 13.: Lagerelement
- 15.: Dämpfungselement
- 16.: Kern
- 17.: Gleitelement
- 18.: Oberfläche
- 19.: Trägerelement
- 20.: Nut
- 21.: Dämpfungselement
- 30.: Lageraußenring
- 31.: Oberfläche
- 32.: Kugeloberfläche
- 33.: Lagerelement
- 34.: Dämpfungselement
- 35.: Kern
- 36.: Gleitelement
- 37.: Distanzring

## Patentansprüche

1. Servolenkung, insbesondere für ein Kraftfahrzeug, mit einem Servomotor, der ein axial verlagerbares Bauelement über eine in einem Gestell (3) drehbar in einem Lager mit Wälzkörpern (6) und einem Lageraußenring (5, 30) gelagerte Mutter (1) antreibt, wobei die Mutter (1) mit einer an dem Bauelement ausgebildeten Gewindespindel (2) in Eingriff steht und in Axialrichtung mittels Lagerelementen (13, 33) und Dämpfungselementen (15, 21, 34) elastisch gegenüber dem Gestell (3) abgestützt ist wobei wenigstens eine äußere Oberfläche (18, 31, 32) des Lageraußenrings (5, 30) als Teil einer Kugeloberfläche ausgebildet ist, **dadurch g**e**k**e**nnzei**c**hn**e**t**, dass die äußere Oberfläche (18, 31, 32) des Lageraußenrings (5, 30) Teil wenigstens einer Kugelfläche mit einem außerhalb einer Ebene des Lagers angeordneten Kugelmittelpunkt (M1, M2) ist.

2. Servolenkung nach Anspruch 1, **dadurch gekennzeichnet , dass** beidseits des Lageraußenrings (30) je eine Oberfläche (31, 32) vorgesehen ist.

3. Servolenkung nach einem der vorhergehenden Ansprüche,
**dadurch gekennzeichnet , dass** die beiden Oberflächen (31, 32) keinen gemeinsamen Mittelpunkt (M1, M2) haben.

4. Servolenkung nach einem der vorhergehenden Ansprüche,
**dadurch gekennzeichnet, dass** ein Ring (37) als Begrenzung des Kippwinkels des Lagers in dem Gehäuse (3) zwischen dem Lageraußenring (30) und dem Gehäuse (3) in einem Abstand von dem Lageraußenring (30) eingesetzt ist.

5. Servolenkung nach einem der vorhergehenden Ansprüche,
**dadurch gekennzeichnet, dass** die Lagerung radial und axial mittels Dämpfungselementen (15, 21, 34) vorgespannt ist.

6. Servolenkung nach einem der vorhergehenden Ansprüche,
**dadurch gekennzeichnet, dass** die Lagerelemente (13, 33) Gleitelemente (17, 36) tragen, und dass jeweils ein Gleitelement an einer benachbarten Oberfläche (18, 31, 32) des Lageraußenrings (5, 30) anliegt.

7. Servolenkung nach Anspruch 1, **dadurch gekennzeichnet, dass** der Lageraußenring (5) einseitig mit einer Kugeloberfläche (18) versehen ist und an der der Oberfläche (18) gegenüber liegenden Seite des Lageraußenrings (5) eine Kegelfläche derart ausgebildet ist, dass die Spitze des erzeugenden Kegels der Mittelpunkt der Kugelfläche ist.

8. Servolenkung Anspruch 7, **dadurch gekennzeichnet, dass** der Lageraußenring (5) an der kegelförmigen ein Element mit Federwirkung gegenüber dem Gestell (3) abgestützt ist.

## Claims

1. Power steering, in particular for a motor vehicle, having a servomotor which drives an axially displaceable component by way of a nut (1) rotatably mounted in a frame (3) in a bearing having rolling bodies (6) and a bearing outer ring (5, 30), wherein the nut (1) is engaged with a threaded spindle (2) constructed on the component and in the axial direction is resiliently supported with respect to the frame (3) by means of bearing elements (13, 33) and damping elements (15, 21, 34), wherein at least one outer surface (18, 31, 32) of the bearing outer ring (5, 30) is constructed as part of a spherical surface, **characterised in that** the outer surface (18, 31, 32) of the bearing outer ring (5, 30) is part of at least one spherical surface having a sphere centre point (M1, M2) arranged outside of a plane of the bearing.

2. Power steering according to claim 1, **characterised in that** one surface (31, 32) respectively is provided either side of the bearing outer ring (30).

3. Power steering according to either of the preceding claims, **characterised in that** the two surfaces (31, 32) do not have a shared centre point (M1, M2).

4. Power steering according to any one of the preceding claims, **characterised in that** a ring (37) is inserted between the bearing outer ring (30) and the housing (3), at a spacing from the bearing outer ring (30), as a limiter of the angle of tilt of the bearing in the housing (3).

5. Power steering according to any one of the preceding claims, **characterised in that** the bearing is pre-tensioned radially and axially by means of damping elements (15, 21, 34).

6. Power steering according to any one of the preceding claims, **characterised in that** the bearing elements (13, 33) support sliding elements (17, 36), and **in that** one sliding element respectively rests on an adjacent surface (18, 31, 32) of the bearing outer ring (5, 30).

7. Power steering according to claim 1, **characterised in that** the bearing outer ring (5) is provided on one side with a spherical surface (18) and on the side of the bearing outer ring (5) opposing the surface (18) there is constructed a conical surface in such a way that the tip of the generated cone is the centre point of the spherical surface.

8. Power steering according to claim 7, **characterised in that** the bearing outer ring (5) is supported on the conical an element with a spring effect with respect to the frame (3).

## Revendications

1. Direction assistée, notamment pour un véhicule à moteur, comportant un servomoteur qui entraîne un élément axialement mobile, au moyen d'un écrou (1) logé rotatif dans un support (3) dans un palier avec des corps de roulement (6) et une bague extérieure de palier (5, 30), cet écrou (1) entrant en contact avec un arbre fileté (2) formé sur ledit élément et étant en appui de manière élastique relativement au support (3) par l'intermédiaire d'éléments de palier (13, 33) et d'éléments amortisseurs (15, 21, 34) en direction axiale, auquel cas au moins une surface extérieure (18, 31, 32) de la bague extérieure de palier (5, 30) est formée en tant que partie d'une surface sphérique (18, 31, 32), **caractérisée en ce que** la surface extérieure (18, 31, 32) de la bague extérieure de palier (5, 30) consiste en au moins une partie d'au moins une surface sphérique avec un point central sphérique (M1, M2) situé hors du plan du palier.

2. Direction assistée selon la revendication 1, **caractérisée en ce que** l'on prévoit une surface (31, 32) des deux côtés de la bague extérieure de palier (30).

3. Direction assistée selon une des revendication précédentes, **caractérisée en ce que** les deux surfaces (31, 32) ne présente aucun point central (M1, M2) commun.

4. Direction assistée selon une des revendication précédentes, **caractérisée en ce qu'**une bague (37) est installée en tant que limitation de l'angle de basculement du palier dans le carter (3), entre la bague extérieure de palier (30) et la carter (3), à une certaine distance de la bague extérieure de palier (30).

5. Direction assistée selon une des revendication précédentes, **caractérisée en ce que** le palier est précontraint radialement et axialement à l'aide d'éléments amortisseurs (15, 21, 34).

6. Direction assistée selon une des revendications précédentes, **caractérisée en ce que** les éléments de palier (13, 33) supportent des éléments coulissants (17, 36) et qu'un élément coulissant vient respectivement buter contre une surface adjacente (18, 31, 32) de la bague extérieure de palier (5, 30).

7. Direction assistée selon la revendication 1, **caractérisée en ce que** la bague extérieure de palier (5) est munie, d'un côté, d'une surface sphérique (18) et qu'une surface conique est formée de telle sorte sur le côté gisant à l'opposé de la surface (18) de la bague extérieure de palier (5) que le sommet du cône à générer est le point central de la surface sphérique.

8. Direction assistée selon la revendication 7, **caractérisée en ce que** la bague extérieure de palier (5) est en appui contre l'élément en forme de cône avec un effet ressort contre le support (3).
